**Europäisches Patentamt**

**European Patent Office**

**Office européen des brevets**

(19)

(11) Publication number: **0 176 992**
A2

(12) # EUROPEAN PATENT APPLICATION

(21) Application number: **85112311.7**

(22) Date of filing: **27.09.85**

(51) Int. Cl.⁴: **B 01 D 13/04**

(30) Priority: **27.09.84 US 655086**

(43) Date of publication of application:
**09.04.86 Bulletin 86/15**

(84) Designated Contracting States:
**DE FR GB IT SE**

(71) Applicant: **E.I. DU PONT DE NEMOURS AND COMPANY
1007 Market Street
Wilmington Delaware 19898(US)**

(72) Inventor: **Trehu, Yves Michel
6 Walnut Ridge Road
Wilmington Delaware 19807(US)**

(72) Inventor: **Wong, Bert Carl
405 Bohl Drive
Marietta Ohio 45750(US)**

(74) Representative: **Abitz, Walter, Dr.-Ing. et al,
Abitz, Morf, Gritschneder, Freiherr von Wittgenstein
Postfach 86 01 09
D-8000 München 86(DE)**

(54) **Reverse osmosis membranes and process for their preparation.**

(57) An aromatic polyamide reverse osmosis membrane having a density of 0.15–0.30 g/cc with a salt rejection of 95% or more and exhibiting improved flux is disclosed. The membrane is prepared by casting a solution of an aromatic polyamide, partially drying the thereby formed pre-membrane to a polymer content of 30 to 50% by weight followed by quenching the pre-membrane with water within 5-10 seconds of leaving the drying step. Optionally, the membrane can be annealed in hot water.

EP 0 176 992 A2

./...

Croydon Printing Company Ltd.

## TITLE

### REVERSE OSMOSIS MEMBRANES AND PROCESS FOR THEIR PREPARATION

### Background of the Invention

#### Field of the Invention

The present invention relates to a low density cast aromatic polyamide reverse osmosis membrane and the process for producing it.

#### Prior Art

U.S. 3,567,632 discloses reverse osmosis membranes prepared from a variety of polymeric materials including aromatic polyamides by casting a solution of the polymer, drying the film and extracting the dried film with water.

U.S. 3,878,109 discloses reverse osmosis membranes prepared by casting a dope containing an aromatic polyamide on a plate or drum, partially drying the dope following by rinsing.

U.S. 4,086,215 discloses reverse osmosis membranes by casting a dope containing a crosslinkable polyamide or polyhydriazide on a plate, drum or supporting material, partially drying and rinsing.

### Summary of the Invention

The present invention relates to a process for preparing a reverse osmosis membrane and the resulting membrane. The process involves casting a layer onto a support from a solution of an aromatic polyamide, partially drying the thereby formed layer and then quickly quenching the thereby formed layer to freeze its structure. The resulting membrane is lower in density than previous similar membranes which results in the membranes of the present invention exhibiting improved flux.

D-5411

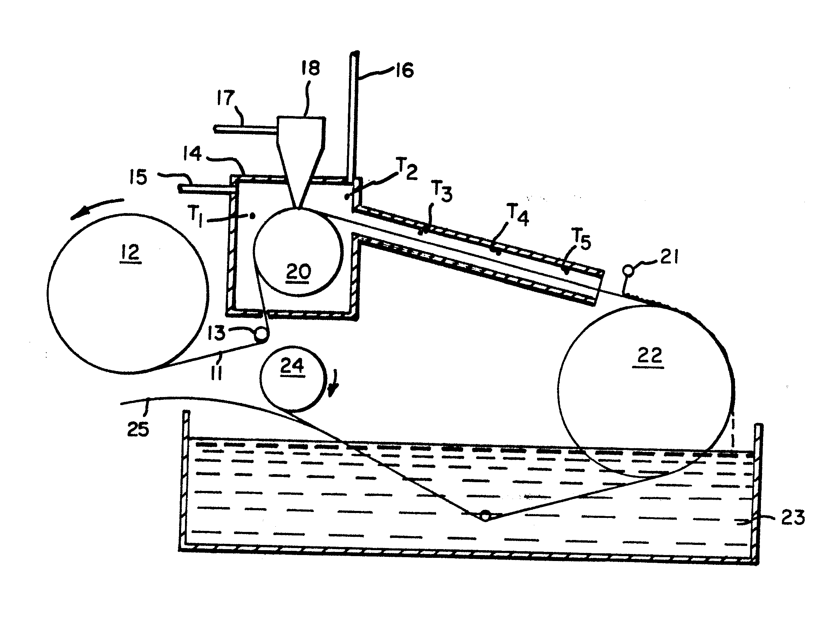

## Brief Description of the Drawing

The drawing is a schematic side view of the apparatus used in the Examples.

## Detailed Description

The reverse osmosis membranes of the present invention are prepared by casting a solution of an aromatic polyamide onto a support to form a layer, evaporating some of the solvent from one surface of the resulting aromatic polyamide layer and then quenching with water. The casting step can be casting the solution on a casting surface, or a support fabric.

The casting solution generally will contain from 10 to 30 wt. % aromatic polyamide and preferably from 15 to 25 wt. % aromatic polyamide. Generally the casting solution also contains a modifying salt. Suitable modifying salts include lithium nitrate, lithium chloride, hydrated magnesium chloride and mixtures thereof. The modifying salt should be present in an amount of from 20-60 wt. % based on the aromatic polyamide.

The solvent used to form the casting solution is a polar organic solvent. Suitable polar organic solvents include dimethylacetamide, dimethyformamide, dimethylsulfoxide, and N-methylpyrrolidone. Of these, dimethylacetamide is preferred.

The aromatic polyamides which can be used in the present invention can be, for example, those nitrogen-containing polymers described in Richter et al., U.S. 3,567,632, which is hereby incorporated by reference. Of the polymers disclosed in this patent, the preferred polymers are derived from meta-phenylenediamine, meta-phenylene diamine-4-sulfonic acid and isophthaloyl chloride and terephthaloyl chloride wherein the ratio of isophthaloyl to terephthaloyl is from about 50:50 to 80:20. The aromatic polyamide generally will have a sulfur content of 0 to 4.0 wt. % with from 1.5 to 3.8 being preferred. The sulfur is present as sulfonic acid groups.

If a fabric support is used, it generally will be a woven unsized polyester or polyamide fabric. Polyesters which can be used in the present invention include those described in Whinfield, U.S. 2,465,319. Of these, the polyethylene terephthalate homopolymers are preferred. Aromatic polyamides which can be used include those described in Sweeny, U.S. 3,287,324.

Generally, the aromatic polyamide solution is cast or extruded at from 0° to 125°C and preferably 15° to 35°C. The range of 15° to 35°C represents ambient temperature and is preferred because of simplicity. The pre-membrane as extruded generally will have a thickness of from 1 to 10 mils, $(2.5 \times 10^{-5}m - 2.5 \times 10^{-4}m)$. After being cast or extruded the pre-membrane is partially dried. The drying is done at 50° to 170°C with from 80 to 150°C being preferred. The drying should be done to the extent necessary to leave from 30 to 50 wt. % aromatic polyamide in the pre-membrane.

After the partial drying step, the pre-membrane is quenched with water. It is critical to the present invention that the quench be done within 10 seconds and preferably 5 seconds after the pre-membrane leaves the drying oven. The quench water should be at from 0° to 30°C. and preferably 10° to 25°C. Generally, the quenching step will last one or two minutes. While longer quench times can be used they offer no improvement over the quench effect obtained after a few minutes. In fact the membrane is normally stored in water at ambient temperature. The quench step serves to gel the polymer and freeze in its structure as well as to extract residual solvent and modifying salt.

In a preferred aspect of the invention, the membrane is annealed after being quenched. The time lag between quenching and annealing is not critical if kept under about a week and the membrane exiting the quench bath may be rolled up, kept wet and annealed later. The annealing is done in one or more heated aqueous baths at 40° to 110°C, and in an especially preferred aspect is done in a plurality of stages.

The membranes of the present invention are from 1 to 10 mils ($2.54 \times 10^{-5}$m - $2.54 \times 10^{-4}$m) in thickness and have densities of from 0.15 to 0.30 g/cc. This results in higher flux rates than the denser membranes of the prior art. The membranes of the present invention exhibit the same salt rejection capability as the denser membranes, i.e., 95% and usually 96% salt rejection.

The membranes of the present invention are anisotropic. That is they are denser on the side from which the solvent has been evaporated during their preparation. This anisotropic nature can be determined using a scanning electron micrograph or a transmission electron micrograph. A non-anisotropic membrane formed of an aromatic polyamide having a density of 0.15 - 0.30 g/cc would not be expected to exhibit any significant salt rejection when used as a reverse osmosis membrane.

The membranes of the present invention generally are flat films, but also can be tubular in nature. Tubular membranes are formed by casting the aromatic dope on a preformed tubular support followed by performing the remaining process steps disclosed herein.

### Examples I-IV

The drawing is a schematic profile of the laboratory film casting unit which was used to prepare the membranes reported in Examples I-IV. A five inch ($12.7 \times 10^{-2}$ m) fluorinated ethylene/propylene film 11 is rewound from roll 12 passed over roller 13 and into chamber 14. Nitrogen is fed into chamber 14 through ducts 15 and 16. Aromatic polyamide solution is fed through duct 17 to die 18 and cast onto film 11 supported on roll 20. The die opening was set at 0.005 inch ($1.27 \times 10^{-4}$ m) and the die had a 0.25 inch ($6.35 \times 10^{-3}$ m) land. The gap between the die exit and casting support is very critical. If too large, a discontinuous film is obtained. If too small, a wavy film of poor thickness uniformity, laterally as well as longitudinally, results. For the type solutions described below, it was found to lie between 5 and 10 mils ($1.27 \times 10^{-4}$ m and $2.54 \times 10^{-4}$ m) and needs to be adjusted for each run. The solution was cast at 80°-85°C in each of the Examples I-IV. The solution feed rate used in each of Examples I-IV was 1.485 cc/minute, the take-off rate was 13 cm/minute and the calculated wet film thickness was 0.0042 inch ($1.067 \times 10^{-4}$ m). The drying time was 4 minutes. The operating temperatures in degrees Centigrade in the dryer at the thermocouple positions shows in the Drawing are reported in Table I below:

## Table I

| $T_1$ | $T_2$ | $T_3$ | $T_4$ | $T_5$ |
|-------|-------|---------|---------|---------|
| 85-90 | 80-85 | 145-150 | 145-150 | 135-140 |

These temperatures were obtained by feeding preheated nitrogen gas into the completely enclosed casting and drying zones. The nitrogen flow rate is not critical as long as it is large enough to ensure that drying is diffusion controlled. In Examples I to IV the flow rate was 16 liters per minute at standard temperature and pressure to provide a calculated linear velocity in the dryer of 20 cm/sec. After leaving the dryer the membrane is quenched with water by quencher 21 (in the short time to quench runs) and then passed around roll 22 into aqueous quench bath 23. The casting film 11 is taken up on roll 24 and the membrane 25 removed from quench bath 23.

### Example I

A 19% by weight solution of a polyamide derived from isophthaloyl chloride and terephthaloyl chloride (in a mole ratio of 70/30) and a mixture of m-phenylenediamine and m-phenylenediamine-4-sulfonic acid, in a ratio to provide 1.5 weight percent sulfur in the polymer, was prepared by dissolving the corresponding amount of polymer into a solution of dimethylacetamide and lithium nitrate, the amount of lithium nitrate corresponding to a concentration of 50% by weight based on polymer. This solution was then fed to the casting unit and a membrane cast and dried as described above. Two series of membranes were prepared, one with a time lag to quench of 7 seconds using quencher 21 and one with a time lag to quench of 120 seconds using quench bath 23 only for quenching. These membranes were then tested at 420 psi (2.9 x $10^6$ Pa) for salt rejection and water flux using a 0.2 wt. % aqueous sodium chloride solution. The results are reported in Table II.

### Example II

Example I is repeated except the polyaramide contains sufficient m-phenylenediamine-4-sulfonic acid to provide a sulfur content of 2.5 weight percent. The results are reported in Table II.

### Example III

Example I is repeated except the polyamide contains sufficient m-phenylenediamine-4-sulfonic acid to provide a sulfur content of 3.5 weight percent. The results are reported in Table II.

### Example IV

Example III is repeated except time lags to quench of 7 and 16 seconds were used. The results are reported in Table II.

### Example V

An 18 weight % solution of a polyamide derived from isophthaloyl chloride and terephthaloyl chloride (in a mole ratio of 70/30) and a mixture of m-phenylenediamine and m-phenylenediamine-4-sulfonic acid in a ratio to provide 3.5 weight percent sulfur was prepared by dissolving the corresponding amount of polymer into a solution of dimethylacetamide and lithium nitrate with the amount of lithium nitrate corresponding to a concentration of 50 weight % based on polymer. This solution was cast on a Texlon® 0715 polyester sailcloth substrate using a commercial casting line to provide a wet thickness of 6-7 mils ($1.5 \times 10^{-4}$m – $1.8 \times 10^{-4}$m), using a 2 minute drying time at 118°C and a take off velocity of 3.6-3.7m/min.

8

In one run, the film was deluge quenched immediately upon exit from the dryer for a lapse time of 5 seconds and annealed for 6 minutes at 42°C, followed by 6 minutes at 59°C followed by 2 minutes at 75°C.  In another run quenching took place after an elapsed time of 20 seconds and the membrane was annealed at 68°C for 30 minutes.  Permeation results are reported in Table II using a 0.2 wt. % aqueous salt solution at 420 psi (2.9 x $10^6$ Pa).

Density as reported herein is weight of solid polymer per unit of volume of wet membrane. The volume is calculated from the measured geometrical dimensions of the wet specimen, and the weight of solid polymer is measured by weighing the same specimen after thorough drying.  (For instance overnight in a vacuum oven kept at 70° to 100°C).

## Table II

| Example No. | Time Lag to quench (sec) | Membrane Thickness (mils) | Salt Rejection (%) | Water Flux (m x sec$^{-1}$ x TPa$^{-1}$) | Density g/cc |
|---|---|---|---|---|---|
| I | 7 | 3.3 | 99.2 | 2.0 | 0.23 |
|  | 120 | 3.1 | 98.6 | 0.9 | 0.37 |
| II | 7 | 3.5 | 98.3 | 2.5 | 0.25 |
|  | 120 | 2.8 | 99.1 | 1.4 | 0.36 |
| III | 7 | 3.2 | 97.6 | 3.1 | 0.19 |
|  | 120 | 2.8 | 98.5 | 2.0 | 0.37 |
| IV | 7 | 3.9 | 97.2 | 3.5 | 0.28 |
|  | 16 | 4.8 | 98.2 | 2.1 | 0.32 |
| V | 5 | - | 96.1 | 6.8 |  |
|  | 20 | - | 97.2 | 4.6 |  |

CLAIMS:

1. A process for preparing reverse osmosis membranes comprising casting a solution of an aromatic polyamide in a polar organic solvent onto a support, partially drying the resulting pre-membrane in a dryer to a polymer content of 30 to 50 weight percent, from 0 to 10 seconds after existing said dryer quenching said pre-membrane with water at from 0°C to 30°C and recovering the resultant reverse osmosis membrane.

2. The process of Claim 1 wherein the solution being cast contains from 10 to 30 weight percent aromatic polyamide and from 20 to 60 weight percent, based on aromatic polyamide of a modifying salt selected from the group consisting of lithium nitrate, lithium chloride, hydrated magnesium chloride and mixtures thereof.

3. The process of Claim 2 wherein the polyamide is derived from a mixture of 50 to 80 parts isophthaloyl chloride and 50 to 20 parts terephthaloyl chloride and m-phenylenediamine with optionally enough m-phenylenediamine-4-sulfonic acid to provide a sulfur content of 0 to 4.0 weight percent in the polymer.

4. An aromatic polyamide reverse osmosis membrane having a density of from 0.15 to 0.30 g/cc and a salt rejection capability of greater than 95%.

5. The membrane of Claim 4 wherein the aromatic polyamide is derived from 50 to 80 parts isophthaloyl chloride and 50 to 20 parts terephthaloyl chloride and m-phenylenediamine and optionally m-phenylenediamine-4-sulfonic acid present in an amount to provide 0 to 4.0 weight percent sulfur in the polymer.

AD-5411

0176992